# EUROPEAN PATENT APPLICATION

(11) **EP 2 926 709 A1**
(43) Date of publication of application: **07.10.2015**
(21) Application number: 15160182.0
(22) Date of filing: 20.03.2015
(51) Int. Cl.: A47L 15/00

(54) **METHOD FOR CONTROLLING DISHWASHER**

(30) Priority: 21.03.2014 KR 20140033547
(71) Applicant: LG Electronics Inc., Yeongdeungpo-gu Seoul 150-721 (KR)
(72) Inventor: Lee, Youmin, 153-802 Seoul (KR); Lee, Jongmin, 153-802 Seoul (KR); Kim, Heeyeon, 153-802 Seoul (KR)
(74) Representative: Greenaway, Martin William

(57) **Abstract**

The present invention relates to a method for controlling a dishwasher. The method for controlling the dishwasher, including a sump for storing washing water collected from a tub and the washing water supplied from a raw water supply section, a washing arm for injecting the washing water at the sump into the tub, a washing pump for feeding the washing water at the sump into the washing arm, and a drainage pump for discharging the washing water at the sump outside, includes supplying the washing water to the sump; rinsing the sump by driving the washing pump and pumping the washing water until the washing water is injected from the washing arm; and dumping the washing water stored into the sump by driving the drainage pump after the rinsing for the sump.

The method for controlling the dishwasher according to the present invention may clean the sump, thereby to save supply amount of the washing water, inject more clean washing water into the washes, and reduce rinsing time.

## Description

### BACKGROUND OF THE INVENTION

### Field of the Invention

The present invention relates to a method for controlling a dishwasher.

### Related Art

A dishwasher is an electric appliance that injects high pressure washing water from washing arm and washes garbage attached to the dishes by the washing water.

The dishwasher generally includes a tub for forming a washing chamber, and a sump, mounted at a bottom side of the tub, for storing the washing water.

A washing pump mounted inside the sump pumps the washing water into the washing arm, and the pumped washing water is injected in high pressure from a nozzle of the washing arm.

In addition, the injected washing water washes the garbage attached to the dishes to fall it on the floor of the tub.

The used washing water is separated from the garbage and then is collected into the sump to discharge it outside.

In order to enhance the rinsing capability for the dishes in prior art, much washing water is supplied or much hot water is supplied.

However, there was a problem that increases the water amount to be used on increasing the washing water amount.

Further, there was a problem that increases use of electricity and therefore lowers energy efficiency on using hot water.

### Summary of the Invention

Problems to be solved by the present invention are as follows.

Firstly, the supply amount of the washing water is saved and the rinsing capability for the dishes is enhanced.

Secondly, the rinsing time is shortened and the rinsing capability for the dishes is enhanced.

Thirdly, it is possible to prevent re-contamination for the dishes caused due to the foreign substances collected at the sump.

The present invention is not limited to the above-mentioned problems and other problems, which are not described above, can be obviously understood to those skilled in the art from the following description.

According to an aspect of the invention, there is provided a method for controlling a dishwasher, including a sump for storing washing water collected from a tub and the washing water supplied from a raw water supply section, a washing arm for injecting the washing water at the sump into the tub, a washing pump for feeding the washing water at the sump into the washing arm, and a drainage pump for discharging the washing water at the sump outside, and including: supplying the washing water to the sump; rinsing the sump by driving the washing pump and pumping the washing water until the washing water is injected from the washing arm; and dumping the washing water stored into the sump by driving the drainage pump after the rinsing for the sump.

According to another aspect of the invention, there is provided a method for controlling a dishwasher including a sump for storing washing water collected from a tub and the washing water supplied from a raw water supply section, a washing arm for injecting the washing water at the sump into the tub, a washing pump for feeding the washing water at the sump into the washing arm, a drainage pump for discharging the washing water at the sump outside, and a filter, disposed between the tub and the washing pump, for filtering foreign substances at the washing water guided from the tub and for guiding the washing water filtered with the foreign substances into the sump, and including: suctioning the washing water stored into the filter through the washing pump into the washing pump; feeding the washing water suctioned through the washing pump into the washing arm; and ending the driving of the washing pump before the washing water is injected from the washing arm.

According to further another aspect of the invention, there is provided a method for controlling a dishwasher including a sump for storing washing water collected from a tub and the washing water supplied from a raw water supply section, a washing arm for injecting the washing water at the sump into the tub, a washing pump for feeding the washing water at the sump into the washing arm, a drainage pump for discharging the washing water at the sump outside, a filter, disposed between the tub and the washing pump, for filtering foreign substances at the washing water guided from the tub and for guiding the washing water filtered with the foreign substances into the sump, and a heater, disposed at the sump, for heating the washing water, and including: hitting and washing the washes by the washing water by driving the washing pump; supplying the washing water to the sump through the raw water supply section; rinsing the sump by driving the washing pump and pumping the washing water until the washing water is injected from the washing arm; dumping the washing water stored into the sump by driving the drainage pump after the rinsing for the sump; hitting and rinsing the dishes by the cold water supplied through the raw water supply section after the dumping; and hitting and rinsing the dishes by the washing water heated by the heater.

It is preferable that the sum of the performance time of the rinsing for the dishes performed by the cold water and/or the performance time of the rinsing for the dishes performed by the hot water is reduced when the performance time of the rinsing for the sump is increased.

It is preferable that the sum of the amount of the washing water supplied to the rinsing for the dishes performed by the cold water and/or the amount of the washing water supplied to the rinsing for the dishes performed by the hot water is reduced when the amount of the washing water supplied during the rinsing for the sump is increased.

The specifics of other embodiments are included in the detailed description and drawings.

### Brief Description of the Drawings

FIG. 1 is a cross-sectional view for a dishwasher according to one embodiment of the present invention.
FIG. 2 is s block view for a controller and surrounding configurations thereof according to one embodiment of the present invention.
FIG. 3 is a flow chart for showing a method for controlling the dishwasher according to one embodiment of the present invention.
FIG. 4 is a block view shown with flow directions of washing water on cleaning.
FIG. 5 minutely represents the method for controlling the dishwasher according to one embodiment of the present invention
FIG. 6 minutely represents the rinsing for a sump according to one embodiment of the present invention.
FIG. 7 is information for water amount, RPM of a washing motor, and driving time of the washing motor stored into a memory according to one embodiment of the present invention.
FIG. 8A is a graph for representing the washing degree for dishes according to the usage of the washing water after ending the rinsing for the dishes according to one embodiment of the present invention, wherein a dotted line represents a case not performing the rinsing for the sump and a solid line represents a case performing the rinsing for the sump.
FIG. 8B is a graph for representing the cloudiness of the washing water according to the usage of the washing water after ending the rinsing for the dishes according to one embodiment of the present invention, wherein the dotted line represents a case not performing the rinsing for the sump and a solid line represents a case performing the rinsing for the sump.
FIG. 9 is a graph for representing the washing degree for the dishes according to the usage of the washing water after ending the rinsing for the dishes according to one embodiment of the present invention, wherein a dotted line represents the case for performing the rinsing for the sump once and a solid line represents the case for performing the rinsing for the sump twice.

### Detailed Description of the Embodiments

Benefits and features of the present invention and how to achieve them will become clear with reference to exemplary embodiments to be described below in detail along with the accompanying drawings. However, the present invention is not limited to embodiments disclosed below and can be implemented various type different from each other. Only the embodiment of the present invention is provided to enable a disclosure of the present invention to be completed and to notice one skilled in the art to which the present invention pertains to, of a category of the present invention perfectly and the present invention is only defined by the category of claims. The same reference numerals refer to identical components in the entire specification.

Hereinafter, the present invention will be described by the embodiments of the present invention with reference to the drawings for describing a method for controlling a dishwasher.

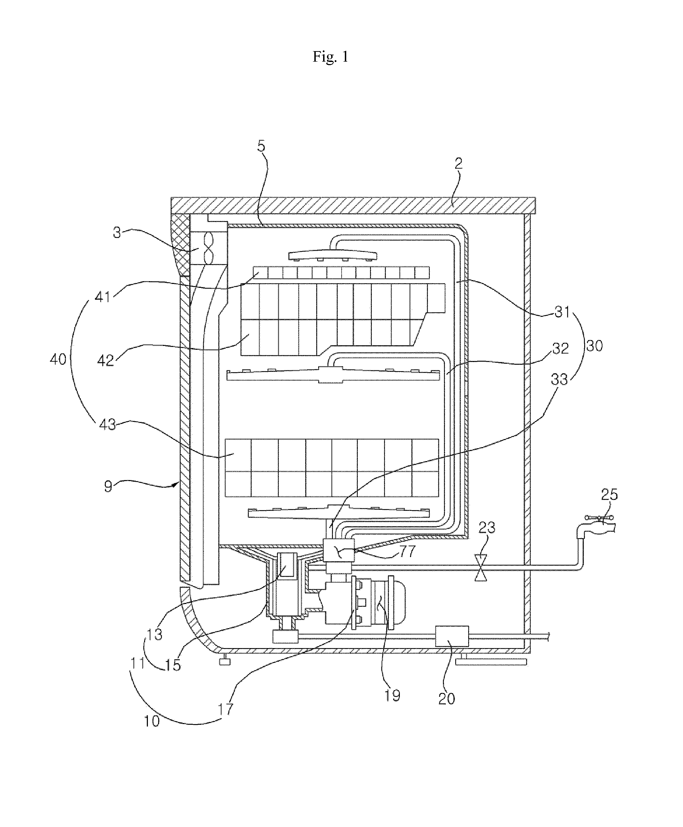

FIG. 1 is a cross-sectional view for a dishwasher according to one embodiment of the present invention.

Referring to FIG. 1, a method for controlling a dishwasher in the embodiment of the present invention, including a washing arm 30 for injecting the washing water into a tub 5, a sump 10 for collecting the washing water injected from the washing arm 30, and a washing motor 19 for producing power for flowing the washing water, includes hitting and washing dishes by the washing water (S120); and rinsing the sump by driving the washing motor 19 so that the washing water is not discharged into the tub 5 (S220).

A casing 2 forms an appearance of the tub 5. The inside of the casing 2 is disposed with the tub 5. The fronts of the casing 2 and the tub 5 are formed with an entrance. A door 9 is disposed at the front of the casing 2 and opens and closes the entrance. The door 9 is opened and closed in a drop-down type. The inside of the door 9 is disposed with a fan 3 for blowing wet air at the inside into the outside on drying the dishes.

Any one of the casing 2 and door 9 is disposed with a detergent supply device that temporally stores a detergent and then supplies the detergent to the inside of the tub 5.

A bottom of the tub 5 is disposed with the sump 10 for collecting the washing water.

Further, the bottom of the tub 5 is disposed with a washing pump 17 for suctioning the washing water from the sump 10 and discharging the suctioned water into the washing arm 30.

In addition, the bottom of the tub 5 is disposed with a drainage pump 20 for discharging the washing water collected at the sump 10 outside.

The bottom of the tub 5 is disposed with a sump cover.

The sump cover is disposed to cover a top side of the sump 10, and guides falling washing water into a filter 11.

The washing pump 17 includes a washing motor 19 and an impeller (not shown).

The impeller (not shown) is coupled with the washing motor 19 and rotated, and the washing water is flown by rotating the impeller.

The sump 10 collects and stores at least one of the washing water supplied from a raw water supply section 25 or the washing water already injected into the tub 5.

A heater 60 heats the washing water, and is disposed at the inside of the sump 10 in the present embodiment.

A dish rack 40 is formed by wires. The dish rack 40 made of synthetic resin may be inject-molded. A plurality of the dish racks 40 is disposed, and the plurality of the dish racks 40 are disposed at the inside of the tub 5 in a vertical direction. The dish racks 40 include a lower rack 43 disposed with the dishes, having high height, such as the dishes or bowls, and a top rack 41 disposed with the dishes , having low height, such as a table cutlery or culinary ware. The lower rack 43 only may be disposed according to the size of the tub 5, and an upper rack 42 may be disposed between the top rack 41 and the lower rack 43.

The washing pump 17 includes a washing pump 19, and the drainage pump 20 includes a drainage motor 21.

The motor converts electrical energy into kinetic energy. The motor forms driving force for moving the washing water. The motor includes a stator wounded with coils, and a rotor for generating electromagnetic interaction and therefore rotating. The stator is disposed with a plurality of the wounded coils and internal resistors. The rotor is disposed with a plurality of magnets for generating the electromagnetic interaction into the coils. The rotor is rotated by the electromagnetic interaction between the coils and magnets.

The rotor rotates the impeller, and the impeller to be rotated flows the washing water. The impeller forms the pressure difference between the insides of the washing pump 17 and the drainage pump 20 to suction the washing water. The impeller compresses and discharges the suctioned washing water. The washing pump 17 feeds the washing water into the washing arm 30. The drainage pump 20 feeds the washing water into the outside of the dishwasher.

The motor is disposed with a hall sensor (not shown) for measuring position of the rotor. The hall sensor generates ON/OFF signals by rotating the rotor. It is possible to estimate the rotation speed and position of the rotor by the ON/OFF signals generated at the hall sensor. The controller 50 commands to apply the driving current to the motor. An inverter outputs power according to PWM signals and supplies the outputted power to the coil at the stator of the motor.

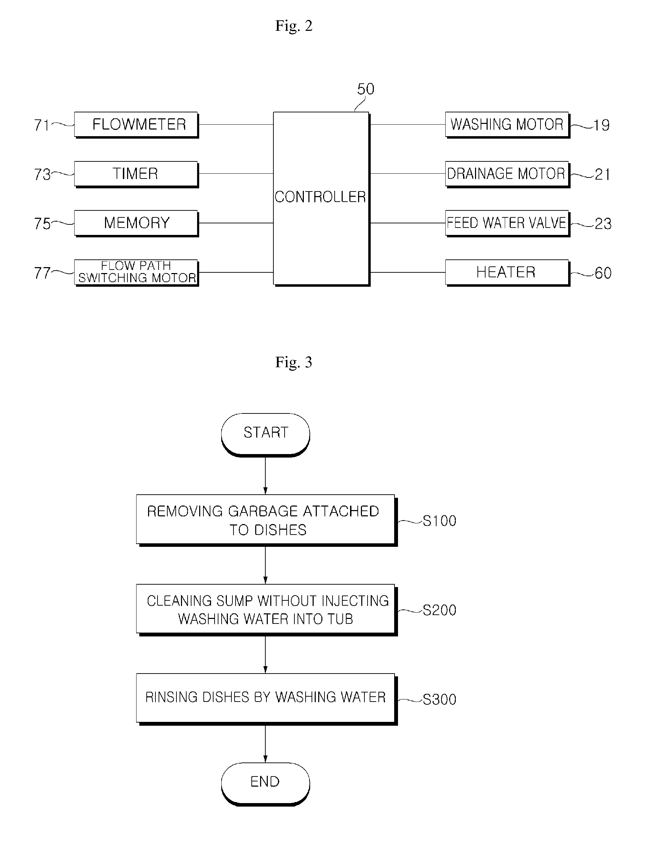

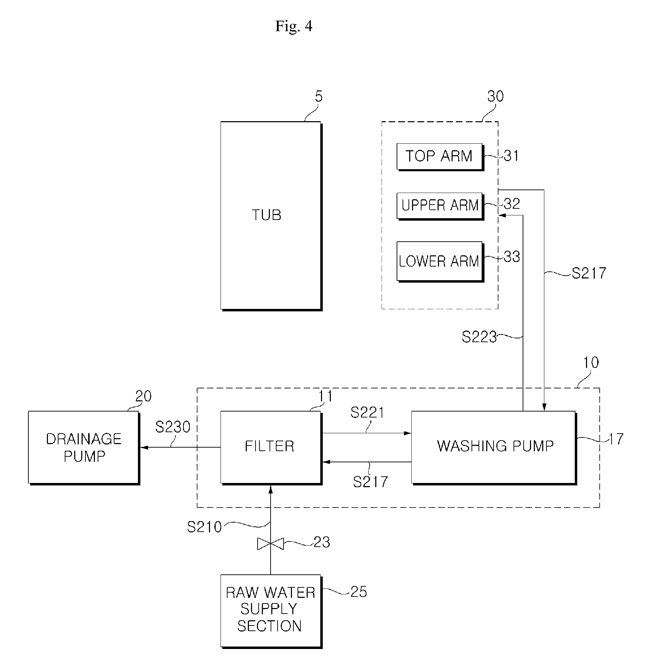

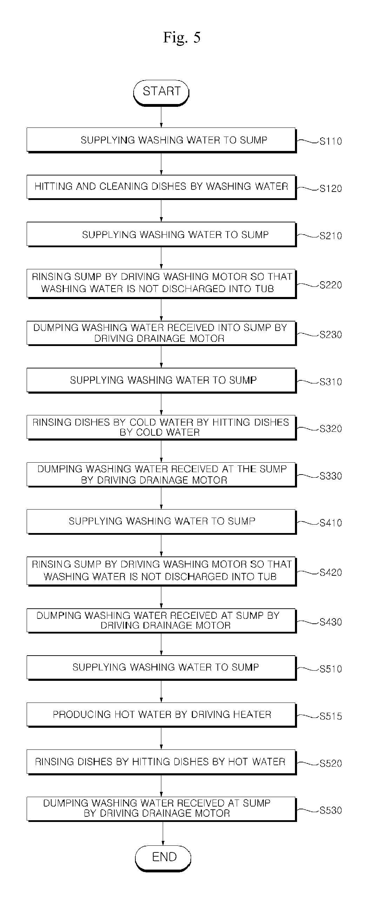

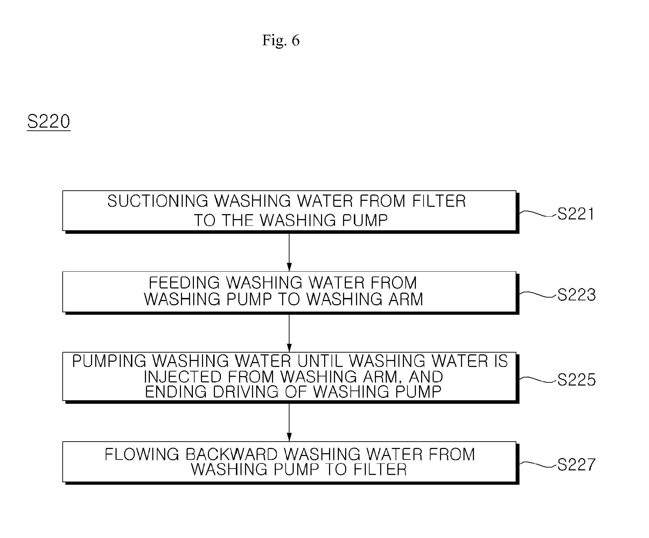

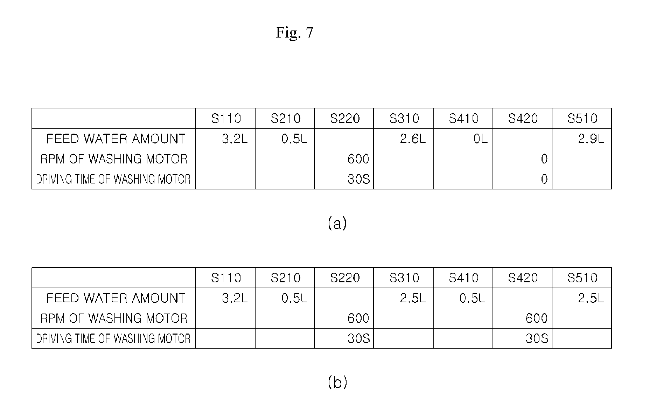

Referring to FIG.2 to FIG.7, the method for controlling the dishwasher according to the present embodiment includes removing the garbage attached to the dishes by the washing water (S100), cleaning the sump 10 without injecting the washing water into the tub 5 (S200), and rinsing the dishes by the washing water (S300).

The washing water used for the removing the garbage (S100) may be cold water supplied through the raw water supply section 25 or the washing water circulated at the tub.

The garbage is separated from the dishes by hitting the dishes by clean washing water supplied to the raw water supply section 25 in the present embodiment.

The cleaning the sump (S200) cleans the sump before the rinsing (S300) and prevents the dishes from re-contaminating.

The washing water used on the rinsing (S300) for the dishes is also the clean washing water supplied from the raw water supply section 25.

It drives the washing pump 17, until the washing water is injected through the washing arm 30, on cleaning the sump (S200).

The washing water used on cleaning the sump (S200) may be the clean washing water supplied from the raw water supply section 25.

On injecting the washing water through the washing arm 30, the garbage inside the sump is also injected and the dishes are re-contaminated, and therefore it pumps the washing water by the water amount not injecting from the washing arm 30.

In particular, the washing water is pumped under the water amount necessary for injecting the washing water from the washing arm 30, and therefore it is desirable to clean the sump 10 by a lot of washing water, if possible.

On performing the cleaning for the sump (S200), it is possible to control flow of the washing water by controlling a feed water valve 23, and it is also possible to control flow of the washing water by controlling the number of rotation of the washing pump 17.

On cleaning the sump 10 through the cleaning for the sump (S200) as in the present embodiment, the washing water amount used for the rinsing for the dishes (S300) may be reduced and the performance time of the rinsing for the dishes (S300) may be reduced.

It is desirable to drain the washing water used for the cleaning for the sump (S200) before the rinsing for the dishes (S300).

The removing the garbage (S100) includes supplying the washing water to the sump 10 (S110), hitting and cleaning the dishes by the washing water (S120), and dumping the washing water received at the sump 10 by driving the drainage motor 21 (S130).

The cleaning for the sump (S200) includes supplying the clean washing water to the sump 10 (S210), rinsing the sump by driving the washing motor 19 so that the washing water is not discharged into the tub 5 (S220), and dumping the washing water received at the sump 10 by driving the drainage pump 20 (S230).

The rinsing for the dishes (S300) rinses the dishes by at least one of the cold water or hot water after the cleaning the sump (S200).

In the present embodiment, after performing the rinsing for the dishes by the cold water (S320), the washing water used for the rinsing is dumped and the rinsing for the dishes (S520) is performed by the hot water.

Dry time for the dishes may be reduced on rinsing the dishes by the hot water.

In addition, the cleaning for the sump may be added between the rinsing for the dishes used with the cold water (S320) and the rinsing for the dishes used with the hot water (S520).

That is, the garbage may be collected into the sump 10 on performing the rinsing for the dishes used with the cold water (S320).

At this time, the cleaning for the sump is added and the inside of the sump 10 is cleaned. Then, when the rinsing for the dishes (S520) is performed by the hot water, rinsing capability for the dishes may be more enhanced.

The washing water used for the cleaning (S120) contains the detergent. The detergent may be supplied from the detergent supply device formed at a door 9. The cleaning (S120) drops the garbage attached to the dishes on the floor of the tub 5. A part of the sump 10 and the washing arm 30 is contaminated by the foreign substances dropped during the washing (S120). The rinsing for the sump (S220) includes the cleaning for flow paths leading to the filter 11, the washing pump 17, the impeller and the washing arm 30, and the washing arm 30.

A method for controlling the dishwasher in the embodiment of the present invention includes supplying the washing water to the sump 10 (S210) after ending the cleaning (S120).

The washing water amount collected into the sump 10 during the supplying (S210) may be formed less than the water amount required to inject the washing water from the washing arm 30 during the rinsing for the sump (S220).

The raw water supply section 25 may be the source of waterworks. The raw water supply section 25 supplies city water, and the washing water may be the city water. The feed water valve 23 blocks the washing water supplied from the raw water supply section 25.

The feed water valve 23 may be a solenoid valve.

A flowmeter 71 measures the flow of the washing water. The flowmeter 71, connected to the raw water supply section 25, measures the flow of the washing water supplied from the outside. The controller 50 receives information from the flowmeter 71 to determine the closing time of the feed water valve 23.

In order to efficiently inject the washing water into the dishes, the dish rack 40 is formed in a grill type. The dish rack 40 may include a roller (not shown) allowing it to back and forth move inside the tub 5. The tub 5 may include a rail for guiding the roller.

The washing arm 30 injects the washing water fed by the washing pump 17 into the inside of the tub 5. The washing arm 30 may be rotated inside the tub 5. A plurality of the washing arms 30 may be disposed according to heights.

Preferably, the washing arm 30 includes a lower arm 33, disposed at a bottom of the lower rack 43, for injecting the washing water into the lower rack 43, an upper arm 32 disposed between the lower rack 43 and the upper rack 42, and a top arm 31 disposed at a top of the top rack 41.

A flow path switching motor 77 may change the flow paths of the washing water discharged from the washing pump 17.

The flow path switching motor 77 in the present embodiment may supply the washing water to any one of the lower arm 33, the upper arm 32, and the top arm 31.

The flow path switching motor 77 may be a step motor. The controller 50 changes the flow paths of the washing water by the flow path switching motor 77.

The memory 75 consists of a volatile memory losing the stored information on cutting off the power and a nonvolatile memory keeping the stored information on cutting off the power.

The memory 75 includes a ROM (Read Only Memory) and a RAM (Random Access Memory). The memory 75 may be preferably the ROM keeping information on cutting off the power.

The memory 75 is stored with information for feed water amount per each cycle, revolutions per minute of the washing motor 19, and the driving time of the washing motor 19.

The controller 50, connected to the memory 75, stores the collected information or drives the set programs. The controller 50 controls the washing motor 19 and the feed water valve 23 based on the information stored into the memory 75.

The controller 50 opens the feed water valve 23 and performs the supplying (S210). The washing water is flown from the raw water supply section 25 to the sump 10 on opening the feed water valve 23. The controller 50 receives information from a timer 73 or the flowmeter 71 to control the water amount.

For example, when the feed water amount is set to 0.5L, the washing water is not injected from the washing arm 30 to the tub 5 because the washing water does not reach a nozzle formed at the washing arm 30. Therefore, in this case, since the washing water rinsing the sump 10 is not injected, it is possible to prevent the re-contamination of the dishes caused due to the foreign substances at the sump.

That is, the amount at which the washing water is not injected is supplied to the sump 10 in the present embodiment and it is possible to rinse or clean the foreign substances collected into the sump.

The feed water amount (0.5L) of the washing water may be variously set by volume of the flow path, etc.

A method for controlling the dishwasher in the embodiment of the present invention includes supplying the washing water to the sump 10 (S210) after ending the washing (S120).

The water amount of the washing water collected into the sump 10 during the supplying (S210) may be formed less than the water amount required to flow backward the washing water from the sump 10 to the tub 5 (S227) during the rinsing for the sump (S220).

The sump 10 disposed at the bottom of the tub 5 receives the washing water. The sump 10 includes a filter net 13 for filtering the foreign substances contained at the washing water, a filter receptor 15 for receiving the filter net 13, and a washing pump 17 for suctioning the washing water collected into the filter receptor 15 and feeding the suctioned washing water into the washing arm 30.

The sump 10 includes a sump cover for covering the top side thereof and guiding falling washing water into the filter 11.

The filter net is formed in a mesh type. The plurality of the filter net 13 having sizes different from each other may be formed. For example, the filter net 13 disposed at the top thereof filters out the foreign substances only having large size because the number of the meshes per unit area is small. The filter net 13 disposed at the bottom thereof filters out the foreign substances having small size because the number of the meshes per unit area is large.

The filter receptor 15 receives the filter net 13. The filter 13 is formed as a depth capable of adequately collecting the foreign substances. The filter receptor 15 is formed as a depth capable of receiving the filter net 13. The filter receptor 15 is connected to the washing pump 17.

The washing pump 17 suctions and discharges the washing water received at the filter receptor 15. The washing pump 17 discharges the washing water into the washing arm 30. The controller 50 receives information from a timer 73 or the flowmeter 71 to control the water amount.

For example, when the feed water amount is set to 0.5L, the washing water flowing from the filter receptor 15 to the tub 5 is not flown backward because the washing water amount is lack. Therefore, the washing water rinsing the sump 10 does not contaminate the dishes laid at the tub 5.

Further, on ending the driving of the washing pump 17, the washing water increased up to a constant height of the washing arm 30 passes the washing pump 17 and may be flown backward into the filter receptor 15. That is, when the feed water amount of the washing water is much, it may be flown backward from the filter receptor 15 to the tub 5 via the filter net 13.

The feed water amount in the present embodiment is set to the amount that is not flown backward from the filter 11 to the tub 5.

When the feed water amount (0.5L) of the washing water may be differed according to the size of the dishwasher and the volume of the flow path.

A rotational speed of the washing motor 19 may be the rotational speed, at the rinsing for the sump (S220) according to the embodiment of the present invention, until the washing water is injected from the washing arm 30.

Generally, lifts are increased on increasing the number of rotation for the washing motor 19. When the lifts of the washing pump 17 are increased, the washing water may be injected into the tub 5 through the washing arm 30. The rotational speed of the washing motor 19 is set to 600RPM in the present embodiment, but the number of rotation may be differed according to the height of the washing arm and the volume of the flow path.

In addition, the rotational speed of the washing motor 19 may be the speed, at the rinsing for the sump (S220), at which the washing water is not flown backward from the sump 10 to the tub 5.

That is, the rotational speed is set to the speed at which the washing water of the sump 10 is not flown backward into the tub 5 through the filter 11.

When the washing water becomes high more than needs, the washing water may be flown backward from the filter receptor 15 to the tub 5 on ending the driving of the washing motor 19.

Therefore, the number of rotation for the washing motor 19 is lowly set to the number of rotation within controllable ranges. The rotational speed of the washing motor 19 is set to 600RPM in the present embodiment, but the number of rotation may be differed according to the size of the filter receptor 15, the height of the washing arm 30 and the volume of the flow path.

The method for controlling the dishwasher in the embodiment of the present invention includes hitting the dishes by the cold water and performing the rinsing for the dishes by the cold water (S320), and the rinsing for the sump (S220) may be performed one times or more than one time before or after the rinsing for the dishes performed by the cold water (S320).

The temperature of the cold water may be the temperature of the washing water supplied from the raw water supply section 25 or the city water.

The temperature of the cold water is the temperature of the washing water that does not supply heat energy by the heater 60.

The temperature of the cold water is an indoor temperature disposed with the dishwasher.

The rinsing for the dishes performed by the cold water (S320) may be performed before or after the rinsing for the sump (S220). Therefore, the rinsing for the dishes performed by the cold water is performed after removing the garbage in the sump 10, thereby to wash the dishes by more clean washing water.

The method for controlling the dishwasher in the embodiment of the present invention includes hitting the dishes by the hot water heated by the heater 60 and performing the rinsing for the dishes performed by the hot water (S520), and the rinsing for the dishes performed by the hot water (S520) may be performed after the rinsing for the sump (S220).

The heater 60 may be disposed at the filter receptor 15. The heater 60 heats the washing water and produces stem or hot water (S515). The heater 60 may be a sheath heater 60. The heater 60 converts electrical energy into heat energy. The washing water suctions the heat energy from the heater 60. The controller 50 controls the driving time of the heater 60.

The controller 50 drives the heater 60 to produce the hot water (S515). The controller 50 drives the heater 60 to control the temperature of the washing water.

The rinsing for the dishes performed by the hot water (S520) helps the drying of the dishes by increasing the temperature of the dishes. The hot water has high solubility, but the cloudiness of the hot water is very low because the sump 10 has been washed by the rinsing for the sump (S220). Therefore, the dishes are washed by the clean hot water, thereby to enhance the cleanliness of the dishes.

The method for controlling the dishwasher in the embodiment of the present invention includes hitting the dishes by the hot water heated by the heater 60 and performing the rinsing for the dishes by the hot water (S520), and the sum of the amount of the washing water supplied to perform the rinsing for the dishes performed by the cold water (S320) and the amount of the washing water supplied to perform the rinsing for the dishes performed by the hot water (S520) is reduced on increasing the washing water amount supplied during the rinsing for the sump (S220).

The cleanliness of the sump 10 is enhanced on performing more the rinsing because the dishes are washed by more clean washing water.

Therefore, the sum of the amounts of the washing water required for the rinsing for the dishes performed by the hot water (S520) and the rinsing for the dishes performed by the cold water (S320) may be reduced on increasing the rinsing times or the washing water amount required for the rinsing.

The method for controlling the dishwasher in the embodiment of the present invention includes rinsing for the dishes by the hot water by hitting the dishes by the hot water heated by the heater 60 (S520), and the sum of the washing water amount supplied during the rinsing for the sump (S220), the amount of the washing water supplied to perform the rinsing for the dishes performed by the cold water (S320), and the water of the washing water supplied to perform the rinsing for the dishes performed by the hot water (S520) may be constantly formed.

For example, when the washing water amount supplied during the rinsing for the sump (S220) is 0.5L, the washing water amount supplied to the rinsing for the dishes performed by the cold water (S320) is 2.6L, the washing water amount supplied to the rinsing for the dishes performed by the hot water (S520) is 2.9L, and the sum of the water amount, that is, 6L may be used.

On the other hand, when the washing water amount supplied during the rinsing for the sump (S220) is two times per 0.5L (or one times per 1.0L), the washing water amount supplied to the rinsing for the dishes performed by the cold water (S320) is 2.5L, the washing water amount supplied to the rinsing for the dishes performed by the hot water (S520) is 2.5L, and the sum of the water amount, that is, 6L may be used.

That is, the washing water amount required for the washing for the dishes may be constantly formed. Therefore, the cleanliness of the dishes may be enhanced while constantly maintaining the washing water amount.

The method for controlling the dishwasher in the embodiment of the present invention includes rinsing the dishes by the hot water by hitting the dishes by the hot water heated by the heater 60 (S520), and the sum of the amounts of the washing water supplied to perform the rinsing for the dishes (S120), the rinsing for the sump (S220), the rinsing for the dishes performed by the cold water (S320), and the rinsing for the dishes performed by the hot water (S520) is constantly maintained.

For example, when the washing water amount supplied during the washing (S120) is 3.2L and the washing water amount supplied to the rinsing for the sump (S220) is 0.5L, the washing water amount supplied to the rinsing for the dishes performed by the cold water (S320) is 2.6L and the washing water amount supplied to the rinsing for the dishes performed by the hot water (S520) is 2.9L. In this case, the sum of the washing water to be consumed is 9.2L.

For another example, when the washing water amount supplied during the washing (S120) is 3.2L and the washing water amount supplied to the rinsing for the sump (S220) is twice per 0.5L (or once per 1.0L), the washing water amount supplied to the rinsing for the dishes performed by the cold water (S320) is 2.5L and the washing water amount supplied to the rinsing for the dishes performed by the hot water (S520) is 2.5L. In this case, the sum of the washing water to be consumed is 9.2L. Therefore, the cleanliness of the dishes may be enhanced while constantly maintaining the washing water amount by the control method according to the present invention.

The method for controlling the dishwasher in the embodiment of the present invention includes rinsing the dishes by the hot water by hitting the dishes by the hot water heated by the heater 60 (S520), and the sum of the performance time of the rinsing for the dishes performed by the cold water (S320) and the performance time of the rinsing for the dishes by the hot water (S520) is reduced when the performance of the rinsing for the sump (S220) is lengthen.

The controller 50 connected to a timer 73 may measure the driving times for the heater 60, the washing motor 19, the drainage motor 21, the feed water valve, etc.

When the performance time of the rinsing for the sump (S220) is lengthened, the sump 10 becomes more cleaner.

When the sump 10 becomes more cleaner, the washing water flowing into the washing arm 30 through the sump 10 also becomes clean. Therefore, the cleanliness of the dishes may be enhanced although the sum of the performance time of the rinsing for the dishes performed by the cold water (S320) and the performance time of the rinsing for the dishes performed by the hot water (S520) is reduced.

The method for controlling the dishwasher in the embodiment of the present invention includes dumping the washing water received at the sump 10 by driving the drainage motor 21 (S230) after ending the rinsing for the sump (S220).

The controller 50 drives the drainage motor 21 to discharge the washing water. Since the washing water at the sump 10 includes the foreign substances after driving the washing motor 19 and therefore the cloudiness of it is increased, the washing water is newly supplied after removing them.

The dumping (S230) may be performed at each last step of the removing for the garbage attached to the dishes (S100) and/or the cleaning for the sump 10 without injecting the washing water into the tub 5 (S200) and/or the rinsing for the dishes performed by the washing water (S300).

The method for controlling the dishwasher according to the embodiment of the present invention includes removing garbage attached to the dishes by the washing water (S100), cleaning the sump 10 without injecting the washing water into the tub 5 (S200), and rinsing the dishes by the washing water (S300).

The removing the garbage (S100) includes supplying the washing water to the sump 10 (S110), hitting and washing the dishes by the washing water (S120), and dumping the washing water received at sump 10 by driving the drainage motor 21 (S130).

The cleaning for the sump 10 without injecting the washing water into the tub 5 (S200) includes supplying the washing water to the sump 10 (S210), the rinsing for the sump performed by driving the washing motor 19 so that the washing water is not discharged into the tub 5 (S220), and dumping the washing water received at the sump 10 by driving the drainage motor 21 (S230).

The rinsing for the dishes performed by the washing motor (S300) includes supplying the washing water to the sump 10 (S310), rinsing for the dishes performed by the cold water (S320) by hitting the dishes by the cold water, and dumping the washing water received at the sump 10 by driving the drainage motor 21 (S330).

The rinsing for the dishes performed by the washing water (S300) includes supplying the washing water to the sump 10 (S510), producing the hot water by driving the heater 60 (S515), rinsing the dishes by hitting the dishes by the hot water (S520), and dumping the washing water received at the sump 10 by driving the drainage motor 21 (S530).

The rinsing for the dishes performed by the washing water (S300) preferably performs both of the rinsing for the dishes performed by the cold water (S320) and the rinsing for the dishes performed by the hot water (S520).

Further, it is desirable that the rinsing for the sump 10 (S220) is performed before the rinsing for the dishes performed by the cold water (S320) and the rinsing for the sump 10 (S420) is performed again before the rinsing for the dishes performed by the hot water (S520).

Supplying the washing water to the sump (S410) is performed before the rinsing for the sump 10 (S420).

Further, dumping the washing water received at the sump (S430) by driving the drainage motor may be performed after the rinsing for the sump (S420).

On the other hand, the cleaning (S200) is preferably performed before the rinsing for the dishes performed by the washing water (S300).

The method for controlling the dishwasher in the embodiment of the present invention includes suctioning the washing water from the filter 11 to the washing pump 17 by driving the washing pump 17 (S221), feeding the washing water from the washing pump 17 to the washing arm 30 by driving the washing pump 17 (S223), and pumping the washing water until the washing water is injected from the washing arm 30 and ending the driving of the washing pump 17 (S225).

The rinsing for the sump (S220) without injecting the washing water into the tub 5 drives the washing motor 19. The controller 50 drives the washing motor 19. The washing motor 19 rotates the impeller to suction the washing water received at the filter 11. The washing water suctioned into the washing pump 17 is flown into the washing arm 30.

A rising height of the washing water is defined according to the rotation number of the washing motor 19. The controller 50 feeds the washing water into the washing arm 30. The controller 50 drives the washing motor 19 so that the washing water is not injected from the washing arm 30. The washing motor 19 preferably rotates by 600RPM. The controller 50 rotates the washing motor 19 during 30 second and then ends the driving of the washing motor 19.

The washing water is flown from the filter 11 to the washing arm 30 via the washing pump 17 on driving the washing motor 19.

The method for controlling the dishwasher in the embodiment of the present invention includes hitting and washing the dishes by the washing water (S120), supplying the washing water to the sump 10 (S210), and dumping the washing water received at the sump 10 by driving the drainage motor 21 (S230).

Wherein, the suctioning (S221), the feeding (S223) and the ending for the driving (S225) are performed between the supplying (S210) and the dumping (S230).

The controller 50 rotates the washing motor 19 to wash the dishes.

The washing (S120) is a part of a process for removing the garbage attached to the dishes. The controller 50 drives the washing motor and performs the suctioning (S221), the feeding (S223) and the ending for the driving (S225).

The method for controlling the dishwasher in the embodiment of the present invention further includes flowing backward the washing water from the washing pump 17 to the filter 11 (S227).

The flowing backward (S227) may be performed between the ending for the driving (S225) and the dumping (S230). The flowing backward (S227) is performed on ending the driving of the washing motor 19.

The washing motor 19 ends the driving when the washing water is increased up to the constant height. Therefore, the washing water having the kinetic energy falls and is flown backward into the filter 10. The controller 50 drives the drainage pump 20 and performs the dumping (S230) on ending the flowing backward (S227).

The foreign substances attached to the filter 11 are separated by the flowing backward (S227).

Actions of the method for controlling the dishwasher in the present invention configured as above are described as follows.

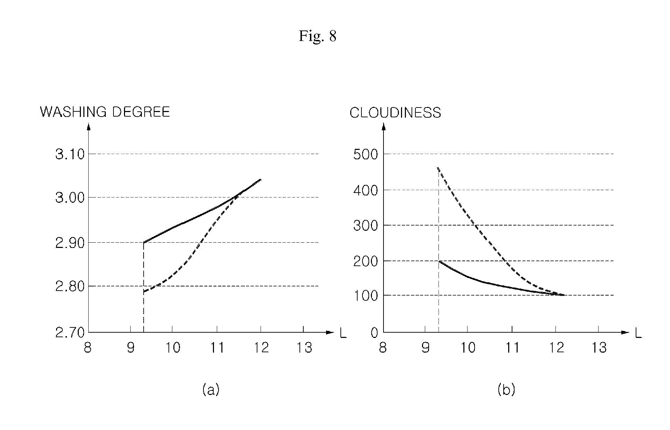

FIG. 8A is a graph for representing the cleaning degree for dishes according to the usage of the washing water after ending the rinsing for the dishes according to one embodiment of the present invention, wherein a dotted line represents a case not performing the rinsing for the sump and a solid line represents a case performing the rinsing for the sump.

Referring to FIG. 8A, the washing water of 11L is consumed and the washing degree is 2.9 in the case that the rinsing for the sump 10 is not performed and the washing water amount is increased(the dotted line).

On the other hand, the washing water of 9.2L only satisfies the washing degree of 2.9 on performing the rinsing for the sump (S220) (the solid line). Therefore, the washing water of 1.8L is saved, and it is possible to achieve the same washing performance.

FIG. 8B is a graph for representing the cloudiness of the washing water according to the usage of the washing water after ending the rinsing for the dishes according to one embodiment of the present invention, wherein the dotted line represents a case not performing the rinsing for the sump and the solid line represents a case performing the rinsing for the sump.

Referring to FIG. 8B, the washing water of 11L is consumed to achieve the cloudiness of 200 in the case that the rinsing for the sump 10 (S220) is not performed and the washing water amount is increased (the dotted line). On the other hand, the washing water of 9.2L only satisfies the clouidiness of 200 on performing the rinsing for the sump (S220) (the solid line).

Likewise, the washing water of 1.8L is saved and it is possible to achieve the same washing performance on performing the rinsing for the sump (S220).

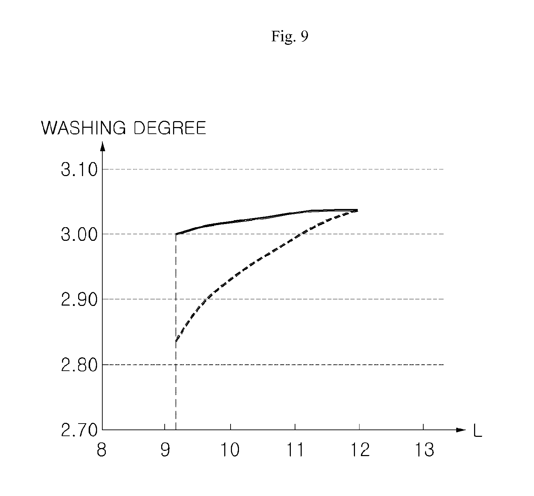

FIG. 9 is a graph for representing the washing degree for dishes according to the usage of the washing water after ending the rinsing for the dishes according to one embodiment of the present invention, wherein the dotted line represents a case performing the rinsing for the sump once and the solid line represents the case performing the rinsing for the sump twice.

Referring to FIG. 9, the washing water of 11L is consumed to achieve the washing degree of 3.00 on performing the rinsing for the sump once (the dotted line). On the other hand, the washing water of 9.2L only satisfies the washing degree of 3.00 on performing the rinsing for the sump twice (the solid line).

Therefore, the washing performance may be enhanced on increasing times of the rinsing for the sump (S220), and the washing water of 1.8L is saved to achieve the same washing performance on performing it twice.

There are the following effects according to the present invention.

Firstly, since the sump is cleaned, the supply amount of the washing water is saved, thereby to enhance the rinsing capability for the dishes.

Secondly, more clean washing water is injected into the dishes, thereby to shorten the rinsing time and to enhance the rinsing capability for the dishes.

Thirdly, the foreign substances attached to the sump may be removed, thereby to prevent re-contamination for the dishes.

The present invention is not limited to the above-mentioned problems and other problems, which are not described above, can be obviously understood to those skilled in the art from the following description.

In addition, although the preferred embodiments of the present invention are shown and described above, the present invention is not limited to above-described specific embodiment and is variously modified by one skilled in the art without the gist of the present invention claimed in the claim, such that the modified embodiment is not to be understood separately from technical ideas or views of the present invention.

## Claims

1. A method for controlling a dishwasher, the dishwasher comprising a sump for storing water collected from a tub and water from a water supply, a washing arm for injecting water from the sump into the tub, a washing pump for feeding the water from the sump into the washing arm, and a drainage pump for discharging the water from the sump, and the method comprising the steps of:
supplying water to the sump;
rinsing the sump by driving the washing pump until an amount of water is supplied to the washing arm; and
dumping water stored in the sump by driving the drainage pump after rinsing the sump.

2. The method for controlling the dishwasher according to claim 1, wherein, in the step of rinsing the sump, the amount of water supplied to the washing arm is less than that needed to inject water into the tub from the sump via the washing arm.

3. The method for controlling the dishwasher according to claim 1 or 2, wherein the amount of water supplied to the washing arm is less than that flowing backward from the washing arm to the sump after stopping the driving of the washing pump after a cleaning cycle.

4. The method for controlling the dishwasher according to any of claims 1 to 3, wherein a rotational speed of the washing pump is less than that needed to inject water into the tub from the sump via the washing arm,
or,
wherein a rotational speed of the washing pump is less than that occurring when water flows backward from the washing arm to the sump after stopping the driving of the washing pump after a cleaning cycle.

5. The method for controlling the dishwasher according to any of claims 1 to 4, wherein the dishwasher further comprises a filter, disposed between the tub and the washing pump, for filtering foreign substances from water guided from the tub and for guiding filtered water into the sump,
and wherein the step of rinsing the sump includes pumping water stored in the filter through the washing pump, feeding the water pumped through the washing pump into the washing arm, and stopping the driving of the washing pump before water is injected into the tub from the washing arm.

6. The method for controlling the dishwasher according to claim 5, further comprising the step of allowing water fed into the washing arm to flow backwards into the filter due to its own weight after stopping the driving of the washing pump.

7. The method for controlling the dishwasher according to any of claims 1 to 6, further comprising the step of rinsing the dishes with cold water after the step of dumping water stored in the sump,
wherein the step of rinsing the sump is performed at least once before and/or after the step of rinsing the dishes with cold water.

8. The method for controlling the dishwasher according to any of claims 1 to 7, wherein the sump further comprises a heater for heating water, and wherein the method further comprises the step of rinsing the dishes using water heated by the heater after the step of dumping water stored in the sump.

9. The method for controlling the dishwasher according to any of claims 1 to 7, wherein the sump further comprises a heater for heating water, and wherein the method further comprises the steps of:
rinsing the dishes with cold water after dumping water stored in the sump; and
rinsing the dishes with water heated by the heater,
wherein the volume of cold water and/or the volume of water heated by the heater is reduced when a volume of water supplied during rinsing the sump is increased.

10. The method for controlling the dishwasher according to any of claims 1 to 7, wherein the sump further comprises a heater for heating water, and wherein the method further comprises the steps of:
rinsing the dishes with cold water after the step of dumping water stored in the sump; and
rinsing the dishes using water heated by the heater,
wherein the sum of the volume of water supplied during the step of rinsing the sump, the volume of cold water and the volume of water heated by the heater is constant.

11. The method for controlling the dishwasher according to any of claims 1 to 7, wherein the sump further comprises a heater for heating water, and wherein the method further comprises the steps of:
rinsing the dishes using cold water after the step of dumping the water stored in the sump; and
rinsing the dishes using water heated by the heater,
wherein the sum of the durations of the steps of rinsing the dishes using cold water and rinsing the dishes using water heated by the heater is reduced when the duration of the step of rinsing the sump is increased.

12. The method for controlling the dishwasher according to any of claims 1 to 7, wherein the sump further includes a heater for heating water, and wherein the method further comprises the steps of:
rinsing the dishes using cold water after dumping water stored in the sump; and
rinsing the dishes using water heated by the heater,
wherein the sum of the durations of the steps of rinsing the sump, rinsing the dishes using cold water and rinsing the dishes using water heated by the heater is constant.

13. A method for controlling a dishwasher according to claim 1, wherein the dishwasher further comprises a filter, disposed between the tub and the washing pump, for filtering foreign substances from water guided from the tub and for guiding filtered water into the sump, and a heater, disposed at the sump, for heating water, and wherein the method further comprises the steps of:
washing the dishes using water driven by the washing pump;
rinsing the dishes using cold water after the step of dumping the water stored in the sump; and
rinsing the dishes using water heated by the heater

14. The method for controlling the dishwasher according to claim 13, wherein the duration of the step of rinsing the dishes using cold water and/or the duration of the step of rinsing the dishes using water heated by the heater is reduced when the duration of the step of rinsing the sump is increased.

15. The method for controlling the dishwasher according to claim 13, wherein the volume of water supplied during the step of rinsing the dishes using cold water and/or the volume of water supplied during the step of rinsing the dishes using water heated by the heater is reduced when the volume of water supplied during the step of rinsing the sump is increased.
